# EUROPEAN PATENT APPLICATION

(11) **EP 4 667 682 A1**
(43) Date of publication of application: **24.12.2025**
(21) Application number: 23922136.9
(22) Date of filing: 03.04.2023
(51) Int. Cl.: E04H 4/16

(54) **TRANSMISSION DEVICE AND POOL CLEANING ROBOT**

(30) Priority: 16.02.2023 CN 202320232759 U
(71) Applicant: Xingmai Innovation Technology (Suzhou) Co., Ltd., Suzhou, Jiangsu 215000 (CN)
(72) Inventor: ZHANG, Shilei, Suzhou, Jiangsu 215000 (CN)
(74) Representative: Huang, Liwei
(86) International application number: PCT/CN2023/086048
(87) International publication number: WO 2024/169007

(57) **Abstract**

The present invention relates to the technical field of pool cleaning robots, and in particular, to a transmission device and a pool cleaning robot. The transmission device includes a driving member, a first driven member, and a second driven member. An output end of the driving member is configured to be drivingly connected to a wheel assembly of the pool cleaning robot, so that the driving member is capable of driving the wheel assembly to rotate. The first driven member is drivingly connected to the wheel assembly. An output end of the first driven member is configured to be connected to a first cleaning member of the pool cleaning robot, and the wheel assembly drives the first driven member to rotate, so that the first driven member drives the first cleaning member to rotate. The second driven member is drivingly connected to the wheel assembly. An output end of the second driven member is configured to be connected to a second cleaning member of the pool cleaning robot, and the wheel assembly drives the second driven member to rotate, so that the second driven member drives the second cleaning member to rotate. According to the transmission device, only one driving member is needed to drive the wheel assembly, the first cleaning member, and the second cleaning member, leading to a simple structure. In this way, cleaning functions of the pool cleaning robot are diversified.

## Description

### TECHNICAL FIELD

The invention relates to the technical field of pool cleaning robots, and in particular, to a transmission device and a pool cleaning robot.

### BACKGROUND

With development of the economy and progress of technology, a pool cleaning robot gradually takes a role in daily life and increasingly grows popular. A transmission device, a significant part of the pool cleaning robot, is mainly configured to drive the pool cleaning robot to move.

In the related technology, a driving wheel and a ground cleaning rolling brush of a pool cleaning robot are driven by different transmission devices, respectively, leading to a complex structure. Moreover, the pool cleaning robot can only clean a bottom of a pool, leading to a single cleaning function and a limitation on application of the pool cleaning robot.

### SUMMARY

The present invention aims to resolve a technical problem that a transmission device and a pool cleaning robot each have a complex driving structure, and the pool cleaning robot has a single cleaning function.

In order to resolve the above technical problem, the present invention employs the following technical solutions:

The present invention provides a transmission device. The transmission device is disposed on a body, and the transmission device includes:
a driving member, where an output end of the driving member is configured to be drivingly connected to a wheel assembly of a pool cleaning robot, so that the driving member is capable of driving the wheel assembly to rotate;
a first driven member, where the first driven member is drivingly connected to the wheel assembly, an output end of the first driven member is configured to be connected to a first cleaning member of the pool cleaning robot, and the wheel assembly drives the first driven member to rotate, so that the first driven member drives the first cleaning member to rotate; and
a second driven member, where the second driven member is drivingly connected to the wheel assembly, an output end of the second driven member is configured to be connected to a second cleaning member of the pool cleaning robot, and the wheel assembly drives the second driven member to rotate, so that the second driven member drives the second cleaning member to rotate.

In some embodiments, the wheel assembly includes a first wheel, a second wheel, and a transmission belt. The first wheel is in transmission connection to the second wheel through the transmission belt, and the output end of the driving member is drivingly connected to the first wheel.

In some embodiments, the transmission device further includes a first gear. The output end of the driving member is connected to the first gear, and the first gear is engaged with the first wheel.

In some embodiments, the second driven member includes a second gear, a first rotating plate, a third gear, and a second rotating plate. The second gear is connected to the first rotating plate, the third gear is connected to the second rotating plate, the first rotating plate is in transmission connection to the second rotating plate through a transmission belt, and the second gear is engaged with the second wheel.

In some embodiments, the second gear and the first rotating plate are disposed coaxially, and the third gear and the second rotating plate are disposed coaxially.

In some embodiments, the second driven member further includes a fourth gear. The fourth gear is engaged with the third gear, and the fourth gear is connected to the second cleaning member.

In some embodiments, the second driven member further includes a fifth gear. The fifth gear is disposed between the third gear and the fourth gear, and the fifth gear is engaged with both the third gear and the fourth gear.

In some embodiments, the first driven member includes a sixth gear and a seventh gear. The sixth gear is engaged with the second wheel, the sixth gear is engaged with the seventh gear, and the seventh gear is connected to the first cleaning member.

In some embodiments, the first driven member further includes an eighth gear. The eighth gear is disposed between the sixth gear and the seventh gear, and the eighth gear is engaged with both the sixth gear and the seventh gear.

In some embodiments, the first cleaning member is a ground cleaning rolling brush, and the second cleaning member is a water surface cleaning rolling brush.

The present invention further provides a pool cleaning robot. The pool cleaning robot includes a body and the above transmission device. The transmission device is disposed on the body.

The present invention has at least the beneficial effects as follows.

The transmission device provided by the present invention is used in a pool cleaning robot. The transmission device includes a driving member, a first driven member, and a second driven member. An output end of the driving member is configured to be drivingly connected to a wheel assembly of the pool cleaning robot, so that the driving member is capable of driving the wheel assembly to rotate. The first driven member is drivingly connected to the wheel assembly. An output end of the first driven member is configured to be connected to a first cleaning member of the pool cleaning robot, and the wheel assembly drives the first driven member to rotate, so that the first driven member drives the first cleaning member to rotate. The second driven member is drivingly connected to the wheel assembly. An output end of the second driven member is configured to be connected to a second cleaning member of the pool cleaning robot, and the wheel assembly drives the second driven member to rotate, so that the second driven member drives the second cleaning member to rotate. The driving member, the first driven member, and the second driven member are disposed, so that only one driving member is needed to drive the wheel assembly, the first cleaning member, and the second cleaning member, leading to a simple driving structure and low manufacturing costs. The driving member drives the wheel assembly to rotate, so that the wheel assembly moves forward or backward. The wheel assembly can drive the first driven member and the second driven member to rotate during rotation, so that the first driven member and the second driven member drive the first cleaning member and the second cleaning member to rotate, respectively. In this way, different cleaning members can work, and cleaning functions of the pool cleaning robot can be diversified.

According to the pool cleaning robot provided by the present invention, different cleaning members can be driven by one driving member, leading to diversified cleaning functions, a simple driving structure, low manufacturing costs, and a light weight.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show only some embodiments of the present invention, and a person of ordinary skill in the art can still derive other drawings from the contents in the embodiments of the present invention and these accompanying drawings without creative efforts.
FIG. 1 illustrates a schematic structural diagram of a pool cleaning robot according to some embodiments of the present invention; and
FIG. 2 illustrates an exploded diagram of a pool cleaning robot according to some embodiments of the present invention.

Reference numerals:
100: body;
200: driving member; 210: first gear;
300: wheel assembly; 310: first wheel; 320: second wheel; 330: transmission belt;
400: first driven member; 410: sixth gear; 420: seventh gear; 430: eighth gear; 440: first cleaning member;
500: second driven member; 510: second gear; 520: third gear; 530: transmission belt; 540: fourth gear; 550: fifth gear; 560: second cleaning member.

### DETAILED DESCRIPTION OF THE EMBODIMENTS

The present invention will be further described in detail below with reference to the accompanying drawings and examples. It can be understood that the specific embodiments described herein are merely used to explain the present invention, but not to limit the present invention. In addition, it is further to be noted that for the convenience of description, only some structures related to the present invention rather than all structures are shown in the accompanying drawings.

In the description of the present invention, unless otherwise explicitly specified and limited, the terms "connected", "connection", and "fixed" should be understood in a broad sense. For example, a connection may be a fixed connection, a detachable connection, an integrated connection, a mechanical connection, an electric connection, a direct connection, an indirect connection via an intermediate medium, communication of structures inside two elements, or an interaction relation of two elements. For a person of ordinary skill in the art, the specific meanings of the above terms in the present invention can be understood according to specific conditions.

In the present invention, unless otherwise explicitly specified and limited, that a first feature is "above" or "below" a second feature may be that the first feature may be in direct contact with the second feature, or the first feature may be in contact with the second feature through another feature between the first feature and the second feature instead of being in direct contact with the second feature. In addition, that the first feature is "above", "on", or "over" the second feature may mean that the first feature is right above or obliquely above the second feature, or may merely mean that a horizontal height of the first feature is greater than that of the second feature. That the first feature is "below", "underneath", or "under" the second feature may be that the first feature is right below or obliquely below the second feature, or may merely mean that a horizontal height of the first feature is less than that of the second feature.

In the description of the present invention, an orientation or position relationship indicated by terms "above", "below", "left", "right", and the like is an orientation or position relationship based on the accompanying drawings, and is only intended to facilitate descriptions and simplify operations, but is not intended to indicate or imply that an apparatus or an element needs to have a specific orientation and be constructed and operated in a specific orientation. Therefore, such terms cannot be understood as a limitation on the present invention. In addition, the terms "first" and "second" are merely used to distinguish in description and have no special meaning.

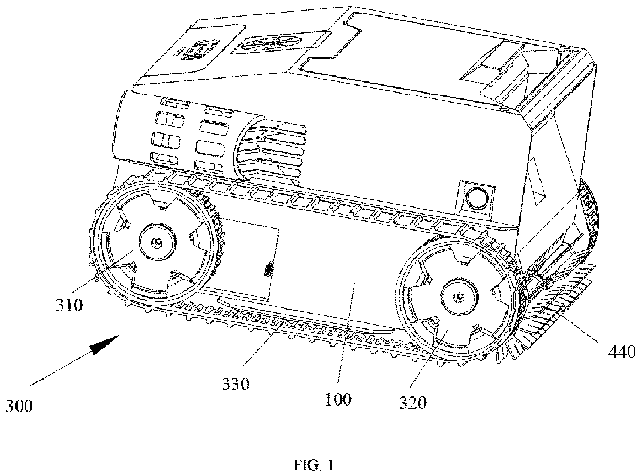

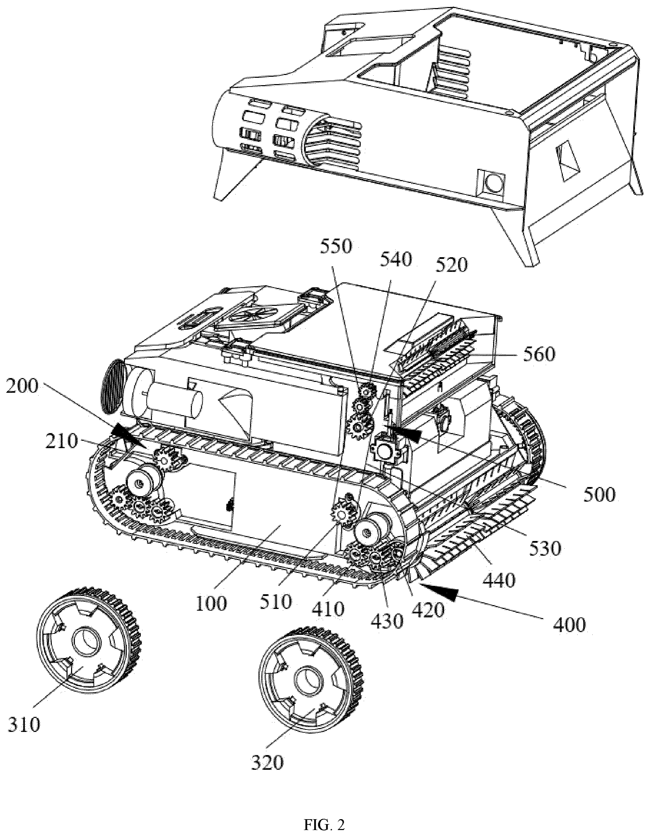

As shown in FIG. 1 and FIG. 2, an embodiment provides a transmission device used in a pool cleaning robot. The pool cleaning robot includes a body 100, a wheel assembly 300, a first cleaning member 440, and a second cleaning member 560. The transmission device is disposed on the body 100. The transmission device mainly includes a driving member 200, a first driven member 400, and a second driven member 500. The driving member 200 is disposed inside the body 100. An output end of the driving member 200 is configured to be drivingly connected to the wheel assembly 300, so that the driving member 200 is capable of driving the wheel assembly 300 to rotate. The first driven member 400 is disposed on the body 100. The first driven member 400 is drivingly connected to the wheel assembly 300. An output end of the first driven member 400 is configured to be connected to the first cleaning member 440, and the wheel assembly 300 drives the first driven member 400 to rotate, so that the first driven member 400 drives the first cleaning member 440 to rotate. The second driven member 500 is disposed on the body 100. The second driven member 500 is drivingly connected to the wheel assembly 300. An output end of the second driven member 500 is configured to be connected to the second cleaning member 560, and the wheel assembly 300 drives the second driven member 500 to rotate, so that the second driven member 500 drives the second cleaning member 560 to rotate. For example, the first cleaning member 440 is a ground cleaning rolling brush, and the second cleaning member 560 is a water surface cleaning rolling brush.

According to the transmission device in this embodiment, the driving member 200, the first driven member 400, and the second driven member 500 are disposed, so that only one driving member 200 is needed to drive the wheel assembly 300, the first cleaning member 440, and the second cleaning member 560, leading to a simple driving structure and low manufacturing costs. The driving member 200 drives the wheel assembly 300 to rotate, so that the wheel assembly 300 moves forward or backward. The wheel assembly 300 can drive the first driven member 400 and the second driven member 500 to rotate during rotation, so that the first driven member 400 and the second driven member 500 drive the first cleaning member 440 and the second cleaning member 560 to rotate, respectively. In this way, different cleaning members can work, and cleaning functions of the pool cleaning robot can be diversified. For example, when the first cleaning member 440 is the ground cleaning rolling brush, and the second cleaning member 560 is the water surface cleaning rolling brush, the wheel assembly 300 is driven to rotate to drive the ground cleaning rolling brush and the water surface cleaning rolling brush to rotate. In this way, the cleaning functions of the pool cleaning robot can be diversified.

In this embodiment, the wheel assembly 300 includes a first wheel 310, a second wheel 320, and a transmission belt 330. The first wheel 310 is in transmission connection to the second wheel 320 through the transmission belt 330, and the output end of the driving member 200 is drivingly connected to the first wheel 310. Specifically, in this embodiment, there are two first wheels 310 and two second wheels 320. The two first wheels 310 are disposed at a front end of the body 100, and the two second wheels 320 are disposed at a rear end of the body 100.

For example, in this embodiment, the driving member 200 includes a motor, and the transmission device further includes a first gear 210. An output end of the motor is connected to the first gear 210, and the first gear 210 is engaged with the first wheel 310, so that the first gear 210 can drive the first wheel 310 to rotate. In addition, the driving member 200 may alternatively be configured as other components capable of providing kinetic energy. This is not limited in this embodiment.

As shown in FIG. 1 and FIG. 2, in this embodiment, the second driven member 500 includes a second gear 510, a third gear 520, a fourth gear 540, a fifth gear 550, a first rotating plate, and a second rotating plate. The second gear 510 is connected to the first rotating plate, the third gear 520 is connected to the second rotating plate, and the first rotating plate is in transmission connection to the second rotating plate through a transmission belt 530. The second gear 510 is engaged with the second wheel 320. The fourth gear 540 is engaged with the third gear 520, and the fourth gear 540 is connected to the second cleaning member 560. The fifth gear 550 is disposed between the third gear 520 and the fourth gear 540, and the fifth gear 550 is engaged with both the third gear 520 and the fourth gear 540.

Specifically, during working, after the driving member 200 is activated, the driving member 200 drives the first gear 210 to rotate. Because the first gear 210 is engaged with the first wheel 310, the first gear 210 can drive the first wheel 310 to rotate. Under the connection through the transmission belt 330, the first wheel 310 can drive, through the transmission belt 330, the second wheel 320 to rotate, the second wheel 320 drives the second gear 510 to rotate, and the second gear 510 drives the first rotating plate to rotate. In this way, the first rotating plate drives, through the transmission belt 530, the second rotating plate to rotate, the second rotating plate drives the third gear 520 to rotate, the third gear 520 drives the fifth gear 550 to rotate, and the fifth gear 550 drives the fourth gear 540 to rotate. Finally, the fourth gear 540 can drive the second cleaning member 560 to rotate. When the second cleaning member 560 is the water surface cleaning rolling brush, the pool cleaning robot can clear and store garbage on a water surface.

In some optional embodiments, the second cleaning member 560 is connected to the fourth gear 540 through a connection shaft. In this embodiment, the second driven member 500 is only disposed on one side of the body 100, thereby simplifying the structure of the pool cleaning robot, reducing costs, and reducing a weight.

Further, in this embodiment, the second gear 510 and the first rotating plate are disposed coaxially, the third gear 520 and the second rotating plate are disposed coaxially, and the second rotating plate is disposed right above the first rotating plate. In this way, the transmission belt 530 can be shortened as much as possible. This reduces costs and improves reliability and stability of the second driven member 500.

As shown in FIG. 1 and FIG. 2, in this embodiment, the first driven member 400 includes a sixth gear 410, a seventh gear 420, and an eighth gear 430. The sixth gear 410 is engaged with the seventh gear 420, the sixth gear 410 is engaged with the second wheel 320, and the seventh gear 420 is connected to the first cleaning member 440. The eighth gear 430 is disposed between the sixth gear 410 and the seventh gear 420, and the eighth gear 430 is engaged with both the sixth gear 410 and the seventh gear 420.

Specifically, during working, after the driving member 200 is activated, the driving member 200 drives the first gear 210 to rotate. Because the first gear 210 is engaged with the first wheel 310, the first gear 210 can drive the first wheel 310 to rotate. Under the connection through the transmission belt 330, the first wheel 310 can drive, through the transmission belt 330, the second wheel 320 to rotate, the second wheel 320 drives the sixth gear 410 to rotate, the sixth gear 410 drives the eighth gear 430 to rotate, and the eighth gear 430 drives the seventh gear 420 to rotate. In this way, the seventh gear 420 can drive the first cleaning member 440 to rotate. When the first cleaning member 440 is the ground cleaning rolling brush, the pool cleaning robot can clean a surface of a pool. The surface of the pool may be a bottom surface or a wall surface of the pool.

Further, with reference to FIG. 2, the first cleaning member 440 is connected to the seventh gear 420 through a connection shaft, and the seventh gear 420 is detachably connected to the body 100 through a bolt. This facilitates later replacement of the first cleaning member 440. The sixth gear 410, the seventh gear 420, and the eighth gear 430 are disposed, so that when it is ensured that the first cleaning member 440 operates normally, the first cleaning member 440 can be detached. This avoids a problem in the conventional technology that the first cleaning member 440 is directly fixedly connected to the second wheel 320 and cannot be detached, improves flexible application of the pool cleaning robot in this embodiment, and reduces costs.

A pool cleaning robot is further provided in this embodiment. The pool cleaning robot includes a body 100 and the above transmission device. The transmission device is disposed on the body 100. According to the pool cleaning robot, different cleaning members can be driven through one driving member 200, leading to diversified cleaning functions, a simple structure, low manufacturing costs, and a light weight. This helps carry and transport the pool cleaning robot and improve operating efficiency. Specifically, the first cleaning member 440 may be a ground cleaning rolling brush, and the second cleaning member 560 may be a water surface cleaning rolling brush. According to the transmission device of the pool cleaning robot, the wheel assembly is driven to rotate to drive the ground cleaning rolling brush and the water surface cleaning rolling brush to rotate. In this way, the cleaning functions of the pool cleaning robot can be diversified.

Furthermore, in this embodiment, the pool cleaning robot includes two transmission devices, two first wheels 310, and two second wheels 320. Each transmission device includes at least one first driven member 400, at least one driving member 200, and at least one second driven member 500.

In a specific embodiment, each transmission device includes one second driven member 400, so that the pool cleaning robot includes two first driven members 400. The two first driven members 400 are disposed on two sides of the body 100, respectively, and the two first driven members 400 are located at positions corresponding to the two second wheels 320, respectively. In this embodiment, the pool cleaning robot includes two first cleaning members 440. In other words, two seventh gears 420 drive the two first cleaning members 440, respectively, thereby improving cleaning efficiency. The first cleaning member 440 may be a ground cleaning rolling brush, so that the pool cleaning robot can clean a surface of a pool. The surface of the pool may be a bottom surface or a wall surface of the pool.

In a specific embodiment, each transmission device includes one driving member 200, so that the pool cleaning robot includes two driving members 200. The two driving members 200 are each drivingly connected to one first wheel 310. In this way, the pool cleaning robot can conveniently make a turn. The first wheel 310 may be a front wheel of the pool cleaning robot, and the second wheel 320 may be a rear wheel of the pool cleaning robot. For example, when the pool cleaning robot needs to make a turn, one driving member 200 enables one first wheel 310 to stop operating or decelerate, and the other driving member 200 acceleratively drives the other first wheel 310 to rotate, so that the pool cleaning robot can make a turn. In this embodiment, the two driving members 200 drive the two first wheels 310 to rotate, respectively. In this way, more power can be provided for the pool cleaning robot, thereby improving the operating efficiency.

In another embodiment, the pool cleaning robot includes two transmission devices, two first wheels 310, and two second wheels 320. Each transmission device includes two first driven members 400, so that the pool cleaning robot has four first driven members 400. The four first driven members 400 are drivingly connected to the two first wheels 310 and the two second wheels 320, respectively. In this way, the four first driven members 400 drive four first cleaning members 440, respectively, thereby improving the cleaning efficiency of the pool cleaning robot.

In still another example, the pool cleaning robot includes four transmission devices, two first wheels 310, and two second wheels 320. Each transmission device includes one first driven member 400 and one driving member 200. Four driving members 200 drive the two first wheels 310 and the two second wheels 320, respectively. Four first driven members 400 are drivingly connected to the two first wheels 310 and the two second wheels 320, respectively. In this way, the four first driven members 400 drive four first cleaning members 440, respectively, thereby improving the cleaning efficiency of the pool cleaning robot.

It should be noted that the basic principles, main features, and advantages of the present invention are shown and described above. A person skilled in the art should understand that the present invention is not limited to the foregoing embodiments, the foregoing embodiments and this specification only describe principles of the present invention, and various changes and modifications may be made to the present invention without departing from the spirit and scope of the present invention. These changes and modifications fall within the protection scope claimed in the present invention. The protection scope claimed in the present invention is defined by the appended claims and equivalents thereof.

## Claims

1. A transmission device used in a pool cleaning robot, wherein the transmission device comprises:
a driving member (200), wherein an output end of the driving member (200) is configured to be drivingly connected to a wheel assembly (300) of the pool cleaning robot, so that the driving member (200) is capable of driving the wheel assembly (300) to rotate;
a first driven member (400), wherein the first driven member (400) is drivingly connected to the wheel assembly (300), an output end of the first driven member (400) is configured to be connected to a first cleaning member (440) of the pool cleaning robot, and the wheel assembly (300) drives the first driven member (400) to rotate, so that the first driven member (400) drives the first cleaning member (440) to rotate; and
a second driven member (500), wherein the second driven member (500) is drivingly connected to the wheel assembly (300), an output end of the second driven member (500) is configured to be connected to a second cleaning member (560) of the pool cleaning robot, and the wheel assembly (300) drives the second driven member (500) to rotate, so that the second driven member (500) drives the second cleaning member (560) to rotate.

2. The transmission device as claimed in claim 1, wherein the wheel assembly (300) comprises a first wheel (310), a second wheel (320), and a transmission belt (330), wherein the first wheel (310) is in transmission connection to the second wheel (320) through the transmission belt (330), and the output end of the driving member (200) is drivingly connected to the first wheel (310).

3. The transmission device as claimed in claim 2, further comprising a first gear (210), wherein the output end of the driving member (200) is connected to the first gear (210), and the first gear (210) is engaged with the first wheel (310).

4. The transmission device as claimed in claim 2, wherein the second driven member (500) comprises a second gear (510), a first rotating plate, a third gear (520), and a second rotating plate, wherein the second gear (510) is connected to the first rotating plate, the third gear (520) is connected to the second rotating plate, the first rotating plate is in transmission connection to the second rotating plate through a transmission belt (530), and the second gear (510) is engaged with the second wheel (320).

5. The transmission device as claimed in claim 4, wherein the second gear (510) and the first rotating plate are disposed coaxially, and the third gear (520) and the second rotating plate are disposed coaxially.

6. The transmission device as claimed in claim 4, wherein the second driven member (500) further comprises a fourth gear (540), wherein the fourth gear (540) is engaged with the third gear (520), and the fourth gear (540) is connected to the second cleaning member (560).

7. The transmission device as claimed in claim 6, wherein the second driven member (500) further comprises a fifth gear (550), wherein the fifth gear (550) is disposed between the third gear (520) and the fourth gear (540), and the fifth gear (550) is engaged with both the third gear (520) and the fourth gear (540).

8. The transmission device as claimed in claim 2, wherein the first driven member (400) comprises a sixth gear **(410)** and a seventh gear (420), wherein the sixth gear **(410)** is engaged with the second wheel (320), the sixth gear **(410)** is engaged with the seventh gear (420), and the seventh gear (420) is connected to the first cleaning member (440).

9. The transmission device as claimed in claim 8, wherein the first driven member (400) further comprises an eighth gear (430), wherein the eighth gear (430) is disposed between the sixth gear (410) and the seventh gear (420), and the eighth gear (430) is engaged with both the sixth gear **(410)** and the seventh gear (420).

10. The transmission device as claimed in any one of claims 1 to 9, wherein the first cleaning member (440) is a ground cleaning rolling brush, and the second cleaning member (560) is a water surface cleaning rolling brush.

11. A pool cleaning robot, comprising a body (100) and the transmission device as claimed in any one of claims 1 to 10, wherein the transmission device is disposed on the body (100).
